# EUROPÄISCHE PATENTSCHRIFT

(11) **EP 3 100 014 B1**
(45) Veröffentlichungstag und Bekanntmachung des Hinweises auf die Patenterteilung: **25.04.2018**
(21) Anmeldenummer: 15701171.9
(22) Anmeldetag: 21.01.2015
(51) Int. Cl.: G01K 7/34, G05D 23/26, G05D 23/20, H05B 3/14, H05B 3/26, H05B 3/68, A47J 37/00, A47J 27/00, F24C 7/06, F24C 7/08

(54) **TEMPERATURMESSUNG AN EINER FLÄCHENHEIZUNG FÜR EIN HAUSHALTSGERÄT**
TEMPERATURE MEASUREMENT ON A SURFACE HEATER FOR A HOUSEHOLD APPLIANCE
MESURE DE TEMPÉRATURE SUR UN SYSTÈME DE CHAUFFAGE PAR RAYONNEMENT POUR UN APPAREIL MÉNAGER

(30) Priorität: 30.01.2014 DE 102014201640
(43) Veröffentlichungstag der Anmeldung: 07.12.2016
(73) Patentinhaber: BSH Hausgeräte GmbH, 81739 München (DE)
(72) Erfinder: DINKEL, Alexander, 83246 Unterwoessen (DE); MATZINGER, Sebastian, 84513 Erharting (DE); ROCH, Klemens, 83308 Trostberg (DE); SCHALLER, Philipp, 83301 Traunreut (DE)
(86) Internationale Anmeldenummer: PCT/EP2015/051095
(87) Internationale Veröffentlichungsnummer: WO 2015/113876

(56) Entgegenhaltungen:
- DE-A1- 4 413 979
- FR-A1- 2 806 794

## Beschreibung

Die Erfindung betrifft eine Flächenheizung für ein Haushaltsgerät, aufweisend mindestens einen auf einer elektrisch isolierenden Isolierungsschicht mit temperaturabhängig veränderbarer Permittivität aufgebrachten bandförmigen Heizleiter.
Zur Bestimmung einer Temperatur an einer Flächenheizung eines Haushaltsgeräts ohne zusätzlichen Temperatursensor ist es bekannt, beispielsweise aus FR2806794 A1, die Kapazität zwischen einem Heizleiter und einem elektrisch leitfähigen Substrat, welche durch eine elektrisch isolierende Isolierungsschicht mit temperaturabhängig veränderbarer Permittivität voneinander getrennt sind, zu bestimmen. Hierbei ist nachteilig, dass zwischen dem Heizleiter und dem Substrat ein Pol der Kapazität (der Heizleiter) an Netzspannung (z.B. 230 V) und der andere Pol (das Substrat) an Masse anliegt. Dies stellt an die Messtechnik einige Anforderungen: So muss die Messtechnik so dimensioniert sein, dass sie durch dieses elektrische Potential nicht beschädigt wird. Die Messtechnik muss ferner gemäß einschlägiger Sicherheitsnormen (z.B. EN60335) eine Hochspannungsfestigkeit von mindestens 1000 V aufweisen. - Der Ableitstrom zwischen Heizleiter und Masse darf zudem nicht über den zulässigen Grenzwert erhöht werden. Eine Grenze für den Ableitstrom beträgt nach EN60335-2-6 (für Herde und Backöfen) 1 mA pro kW Leistung. Diese Forderungen könnten umgangen werden, indem das Substrat gegenüber der Masse Isoliert wird, wodurch jedoch ein "Berührschutz" erforderlich wird. Diese Forderungen könnten auch umgangen werden, indem die Messtechnik wegschaltbar ist und nur wechselweise mit der Heizleistung zugeschaltet wird. Beide Fälle bedingen einen erheblichen Aufwand, welcher signifikante Kosten mit sich bringt.

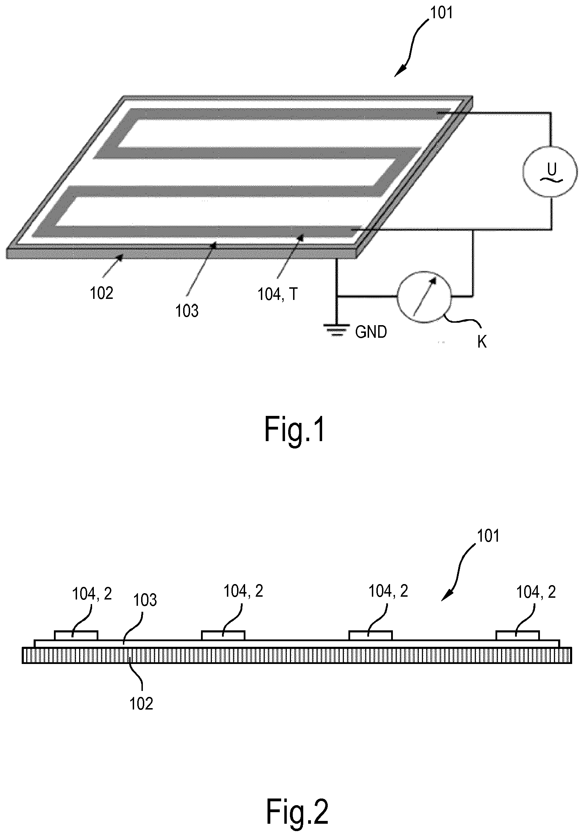

**Fig.1** zeigt in Schrägansicht eine solche Flächenheizung 101, bei der ein plattenartiges metallisches Trägersubstrat 102 an einer Seite von einer elektrisch isolierenden Isolierungsschicht 103 flächig belegt ist. Das Trägersubstrat 102 liegt an Masse GND an. **Fig.2** zeigt die Flächenheizung 101 als Querschnittsdarstellung in Frontalansicht. Auf der dem Trägersubstrat 102 abgewandten Seite der Isolierungsschicht 103 ist ein bandförmiger, mäanderartig verlaufender Schichtheizleiter 104 aufgebracht. An den Schichtheizleiter 104 kann zur Wärmeerzeugung eine Netzspannung U angelegt werden. Mittels einer Kapazitätsmesseinrichtung K wird die Kapazität C eines Kondensators 102, 103, 104 gemessen, dessen einer Pol dem Schichtheizleiter 104 und dessen anderer Pol dem Trägersubstrat 102 entspricht. Die Isolierungsschicht 103 entspricht dem Dielektrikum des Kondensators 102 - 104, welches eine temperaturabhängig veränderbare Permittivität aufweist. Die Kapazitätsmesseinrichtung K ist dazu einerseits an den Schichtheizleiter 104 und andererseits an das Trägersubstrat 102 elektrisch angeschlossen. Ändert sich die Temperatur T des Schichtheizleiters 104, ändert sich auch die Temperatur der Isolierungsschicht 103 und damit auch deren Permittivität. Die sich ändernde Permittivität bewirkt eine Änderung der Kapazität C(T) des Kondensators 102 - 104, welche sich durch die Kapazitätsmesseinrichtung K messen lässt. Mittels einer Auswerteeinheit (o. Abb.), welche an einen Ausgang der Kapazitätsmesseinrichtung K angeschlossen ist, lässt sich daraus die Temperatur der Isolierungsschicht 103 und damit mit nur geringer bis vernachlässigbarer Abweichung auch die Temperatur T des Schichtheizleiters 104 bestimmen. Die Kapazitätsmesseinrichtung K und die Auswerteeinheit können Teile oder Funktionen einer Temperaturmessvorrichtung darstellen.

Bekannt ist auch eine Temperaturbestimmung mittels einer Messung eines elektrischen Widerstands des Heizleiters, falls dieser temperaturabhängig ist.

Es ist die **Aufgabe** der vorliegenden Erfindung, die Nachteile des Standes der Technik zumindest teilweise zu überwinden und insbesondere eine verbesserte Möglichkeit zur Temperaturmessung ohne zusätzlichen Temperatursensor an einer Flächenheizung für ein Haushaltsgerät bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch eine Flächenheizung für ein Haushaltsgerät, aufweisend mindestens einen auf einer elektrisch isolierenden Isolierungsschicht mit temperaturabhängig veränderbarer Permittivität aufgebrachten Heizleiter, wobei auf der gleichen Seite der Isolierungsschicht wie der Heizleiter mindestens eine gegenüber dem mindestens einen Heizleiter elektrisch isolierte Messelektrode aufgebracht ist.

Die Aufgabe wird auch gelöst durch eine Temperaturmesseinrichtung für eine Flächenheizung nach einem der vorhergehenden Ansprüche, welche Temperaturmesseinrichtung eine Kapazitätsmesseinrichtung aufweist oder ist, wobei die Kapazitätsmesseinrichtung an mindestens eine Messelektrode angeschlossen ist.

Beide Vorrichtungen ermöglichen eine temperaturabhängige Kapazitätsmessung an der Flächenheizung, wobei eine Nutzung des mindestens einen Heizleiters als ein Pol eines Kondensators mit seinen Nachteilen vermieden wird. Insbesondere ist die Kapazitätsmesseinrichtung zur Netzspannung isoliert. Es bestehen keine Anforderungen bezüglich eines Ableitstroms oder einer Hochspannungsfestigkeit. Zudem kann mindestens eine Messelektrode an die Kapazitätsmesseinrichtung angeschlossen werden, welche von dem Heizleiter elektrisch isoliert ist, aber durch die Anordnung auf der gleichen Seite der Isolierungsschicht so nahe an dem mindestens einen Heizleiter positionierbar ist, dass eine genaue Temperaturbestimmung möglich ist.

Es ist eine Weiterbildung, dass die Messelektroden (einschließlich der Messgegenelektrode) spannungsfrei sind, um eine genaue Messung mit besonders einfachen Mitteln zu ermöglichen.

Der mindestens eine Heizleiter mag insbesondere mindestens einen schichtartigen Heizleiter aufweisen, z.B. einen Dickschicht-Heizleiter. Dies ermöglicht eine kompakte Bauweise und eine feste Verbindung des Heizleiters mit dem Isoliermaterial. Der mindestens eine Heizleiter mag beispielsweise mittels einer Plasmabeschichtung aufgebracht werden.

Der mindestens eine Heizleiter mag insbesondere ein metallischer Heizleiter sein. Der mindestens eine Heizleiter mag aber auch Kohlenstoffnanoröhrchen, CNT, aufweisen. Der mindestens eine Heizleiter mag auch aus elektrisch leitfähiger Keramik bestehen. Der mindestens eine Heizleiter mag ferner ein PEMS ("Porcelain Enamel Metal Substrate")-Heizleiter sein.

Der mindestens eine Heizleiter mag insbesondere ein bandförmiger Heizleiter sein. Dies ermöglicht einen hohen Bedeckungsgrad des Heizleiters und auf einfache Weise eine vielgestaltige Formgebung.

Es ist eine Weiterbildung, dass der mindestens eine Heizleiter als ein mäanderförmig verlaufender Heizleiter ausgebildet ist. Dies ermöglicht einen besonders hohen Bedeckungsgrad des Heizleiters und eine flächig gleichmäßige Erwärmung. Der mäanderförmig verlaufende Heizleiter mag insbesondere ein Heizleiter sein, dessen Krümmungsrichtung sich regelmäßig ändert. Insbesondere mag darunter ein Verlauf verstanden werden, bei welcher geradlinige Abschnitte sich mit z.B. U-förmig gebogenen oder geradlinigen Verbindungsabschnitten abwechseln, so dass zumindest zwei geradlinige Abschnitte beabstandet parallel zueinander verlaufen.

Die Isolierungsschicht mag eine geschlossene oder ununterbrochene Isolierungsschicht sein, auf welcher der mindestens eine Heizleiter aufgebracht ist. Dies erleichtert eine Herstellung, insbesondere da der Heizleiter frei auf der Isolierungsschicht positionierbar ist. Es ist eine zur Einsparung von Isoliermaterial vorteilhafte alternative Ausgestaltung, dass sich die Isolierungsschicht im Wesentlichen nur unterhalb des mindestens einen Heizleiters befindet und dabei insbesondere etwas breiter ist als der Heizleiter. Eine solche Isolierungsschicht macht die Form des mindestens einen Heizleiters zumindest überwiegend mit.

Die Messelektrode (einschließlich einer Messgegenelektrode) mag aus dem gleichen Material bestehen wie der Heizleiter, was eine Herstellung erleichtert. Die Messelektrode mag alternativ aus einem zu dem Heizleiter unterschiedlichen Material bestehen, z.B. aus einem anderen Metall, insbesondere zur Erreichung einer genaueren Kapazitätsmessung.

Die Kapazitätsmesseinrichtung mag mit einem Messanschluss an genau einer Messelektrode angeschlossen sein. Die Kapazitätsmesseinrichtung mag alternativ zur kombinatorischen Temperaturmessung an mehreren Stellen der Flächenheizung und damit zur Vermeidung von Messausreißern mit einem Messanschluss parallel an mehrere Messelektroden angeschlossen sein.

Es ist eine weitere Ausgestaltung, dass die Messelektrode eine streifenförmige oder geradlinig bandförmige Messelektrode ist, welche in einem Bereich zwischen zwei parallel verlaufenden Abschnitten des Heizleiters angeordnet ist. Dadurch befindet sich die Messelektrode an einem gleichmäßig erwärmten Bereich der Isolierungsschicht, was eine Messgenauigkeit verbessert. Der Heizleiter mag insbesondere ein mäanderförmig verlaufender Heizleiter sein.

Es ist eine Ausgestaltung, dass mindestens zwei Messelektroden an der Flächenheizung vorhanden sind und die Kapazitätsmesseinrichtung zwischen zwei der Messelektroden geschaltet ist. Die beiden Messelektroden dienen also als die Pole (als Messelektrode bzw. als Messgegenelektrode) für die Kapazitätsmessung, welche durch die Isolierungsschicht voneinander getrennt sind. Diese Ausgestaltung lässt sich besonders einfach umsetzen. Die Kapazitätsmesseinrichtung kann an jedem Messanschluss an jeweils eine Messelektrode angeschlossen sein, also die Kapazität zwischen genau zwei Messelektroden als den Polen messen, oder kann an mindestens einem Messanschluss an mehr als eine Messelektrode angeschlossen sein, insbesondere an mindestens zwei elektrisch parallel geschaltete Messelektroden.

Es ist noch eine Ausgestaltung, dass die Flächenheizung mindestens eine mittels der Isolierungsschicht von dem mindestens einen Heizleiter und von der mindestens einen Messelektrode getrennte Messgegenelektrode aufweist. Dadurch kann die Kapazitätsmesseinrichtung einerseits an mindestens einer Messelektrode und andererseits an mindestens einer davon mittels der Isolierungsschicht getrennten Messgegenelektrode angeschlossen sein. Die Kapazitätsmesseinrichtung kann also die Kapazität der Isolierungsschicht durch auf entgegengesetzten Seiten der Isolierungsschicht angeordneten, insbesondere aufliegenden, Elektroden messen. Dies mag ein besonders genaues Messergebnis liefern. Die mindestens eine Messgegenelektrode ist ebenfalls gegen den mindestens einen Heizleiter elektrisch isoliert.

Es ist ferner eine Ausgestaltung, dass der mindestens eine Heizleiter über die Isolierungsschicht auf einem flächigen, elektrisch leitfähigen Trägersubstrat aufgebracht ist und das Trägersubstrat als Messgegenelektrode vorgesehen ist. Dies ergibt eine besonders stabile Ausgestaltung der Flächenheizung. Zudem kann die Kapazitätsmesseinrichtung so besonders einfach an die Messgegenelektrode angeschlossen werden. Das Trägersubstrat mag beispielsweise ein metallisches Substrat sein.

Es ist auch eine Ausgestaltung, dass die Isolierungsschicht als ein elektrisch isolierendes Trägersubstrat ausgebildet ist, z.B. aus Glas, Glaskeramik oder Keramik, insbesondere als Platte. Dies ermöglicht weitere Anwendungsmöglichkeiten der Flächenheizung, beispielsweise wenn zusätzlich oder alternativ zu der Isoliereigenschaft eine besondere Härte, Transparenz oder Transluzenz usw. gewünscht ist. Das Trägersubstrat kann dann als die Isolierungsschicht bzw. als Dielektrikum des durch die Kapazitätsmesseinrichtung ausgemessenen Kondensators dienen.

Es ist eine Weiterbildung, dass der Heizleiter bei Vorliegen eines elektrisch isolierenden Trägersubstrats direkt auf dem Trägersubstrat aufliegt. Dies mag eine Herstellung vereinfachen, da auf eine gesonderte Isolierungsschicht verzichtet werden kann.

Es ist außerdem eine Ausgestaltung, dass an einer dem Heizleiter abgewandten Seite des elektrisch isolierenden Trägersubstrats mindestens eine Messgegenelektrode angeordnet ist. So kann auf besonders einfache und präzise Weise die sich ändernde Permittivität des Trägersubstrats erfasst werden.

Alternativ mag auch hier die Kapazität durch auf der gleichen Seite des Trägersubstrats angeordnete Messelektroden bestimmt werden.

Es ist noch eine Ausgestaltung, dass der mindestens eine Heizleiter über die Isolierungsschicht auf einer Seite einer als Messgegenelektrode vorgesehenen flächigen, elektrisch leitfähigen Schicht aufgebracht ist, welche Schicht mit ihrer anderen Seite an einem elektrisch isolierenden Trägersubstrat angeordnet ist. In diesem Fall dient die Isolierungsschicht als das Dielektrikum, nicht das Trägersubstrat. Dies weist den Vorteil auf, dass Eigenschaften der Isolierungsschicht, z.B. deren Material und/oder Dicke, gezielt zur Erlangung einer besonders hohen Messgenauigkeit der Kapazität und/oder für eine besonders zuverlässige Messung ausgesucht werden kann.

Es ist noch eine weitere Ausgestaltung, dass in die Seite des elektrisch isolierenden Trägersubstrats, welche dem mindestens einen Heizleiter abgewandt ist, mindestens ein elektrisch leitfähiges Kontaktelement zur elektrischen Kontaktierung einer auf dieser Seite des Trägersubstrats aufsetzbaren Messgegenelektrode eingelassen ist. Die Messgegenelektrode ist also kein fester Bestandteil der Flächenheizung, sondern ein davon getrennt handhabbarer, an seiner Aufsatzfläche auf das Kontaktelement elektrisch leitfähiger Gegenstand. Der Gegenstand mag insbesondere ein von einem Nutzer des Haushaltsgeräts üblicherweise handhabbarer Gegenstand sein, insbesondere ein zumindest an dem Trägersubstrat elektrisch leitfähiger Gegenstand sein. Der Gegenstand mag insbesondere ein Gargeschirr sein, insbesondere ein Kochgeschirr. Insbesondere das Trägersubstrat mag also insbesondere als das Dielektrikum für einen Kondensator dienen, dessen einer Pol durch mindestens eine an dem Trägersubstrat angeordnete Messelektrode und dessen anderer Pol durch den als Messgegenelektrode dienenden, nutzerseitig aufsetzbaren Gegenstand, insbesondere Gargeschirr, gebildet wird. Mittels des Kontaktelements kann der Gegenstand elektrisch kontaktiert und darüber mit der Kapazitätsmesseinrichtung verbunden sein. Das Kontaktelement sowie deren elektrische Verbindungsleitung zu der Kapazitätsmesseinrichtung sind gegenüber dem Heizleiter elektrisch isoliert.

Grundsätzlich mag die Temperaturmesseinrichtung auch einen Teil der Flächenheizung darstellen bzw. als ein solcher Teil angesehen werden. Insbesondere mag die mindestens eine Mess(gegen)elektrode sowohl einen integralen Teil der Flächenheizung als auch einen Teil der Temperaturmesseinrichtung darstellen.

Die Aufgabe wird auch gelöst durch ein Haushaltsgerät mit mindestens einem System aus mindestens einer Flächenheizung wie oben beschrieben und mindestens einer Temperaturmesseinrichtung wie oben beschrieben.

Das Haushaltsgerät mag insbesondere ein Gargerät sein, ist aber nicht darauf beschränkt. Falls das Haushaltsgerät ein Gargerät ist, mag die Flächenheizung beispielsweise Anwendung in einem Backofen finden, z.B. als Oberhitze, Unterhitze, Umluftheizung, Seitenwandbeheizung, Backraumteiler, beheiztes Zubehör usw. Die Flächenheizung mag z.B. auch als eine Heizung zur Dampferzeugung in Dampfgargeräten eingesetzt werden. Des Weiteren ist der Einsatz als Kochstelle für konventionelle Kochfelder möglich, aber auch für Teppan-Yakis, Warmhalteplatten, Tischgrills usw.

Auch kann die Flächenheizung in andersartigen Haushaltsgeräten eingesetzt werden, z.B. in Wäschepflegegeräten (z.B. in Waschmaschinen und/oder Wäschetrocknern), in Spülmaschinen (z.B. als Laugenheizung) oder in Haushaltskleingeräten wie Wasserboilern, Wasserkochern, Kaffeemaschinen, Haarglättern, Küchenmaschinen usw.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.
- Fig.3: zeigt in Schrägansicht eine erfindungsgemäße Flächenheizung mit zugehöriger Kapazitätsmesseinrichtung gemäß einem ersten Ausführungsbeispiel;
- Fig.4: zeigt die Flächenheizung gemäß dem ersten Ausführungsbeispiel als Schnittdarstellung in Frontalansicht;
- Fig.5: zeigt in Schrägansicht eine erfindungsgemäße Flächenheizung mit zugehöriger Kapazitätsmesseinrichtung gemäß einem zweiten Ausführungsbeispiel;
- Fig.6: zeigt ein Ersatzschaltbild der Flächenheizung und der zugehörigen Kapazitätsmesseinrichtung gemäß dem zweiten Ausführungsbeispiel;
- Fig.7: zeigt die Flächenheizung gemäß einem dritten Ausführungsbeispiel als Schnittdarstellung in Frontalansicht;
- Fig.8: zeigt eine Flächenheizung gemäß einem vierten Ausführungsbeispiel als Schnittdarstellung in Frontalansicht; und
- Fig.9: zeigt eine Flächenheizung gemäß einem fünften Ausführungsbeispiel als Schnittdarstellung in Frontalansicht.

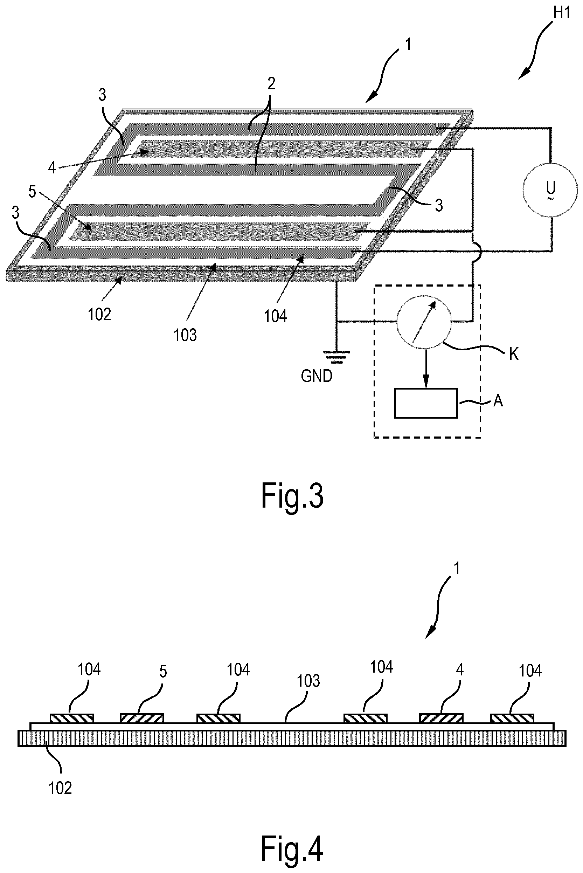

**Fig.3** zeigt in Schrägansicht eine erfindungsgemäße Flächenheizung 1 mit zugehöriger Kapazitätsmesseinrichtung K in einem oder für ein Haushaltsgerät H1 gemäß einem ersten Ausführungsbeispiel. Die Flächenheizung 1 ist ähnlich zu der Flächenheizung 101 aufgebaut und weist z.B. ebenfalls ein plattenartiges metallisches Trägersubstrat 102 auf, das an einer Seite von einer elektrisch isolierenden Isolierungsschicht 103 flächig belegt ist. Auf der dem Trägersubstrat 102 abgewandten Seite der Isolierungsschicht 103 ist ebenfalls ein bandförmiger, mäanderartig verlaufender Schichtheizleiter 104 aufgebracht, an den zur Wärmeerzeugung eine Netzspannung U, z.B. von 230 Volt, angelegt werden kann. **Fig.4** zeigt die Flächenheizung 1 als Querschnittdarstellung durch geradlinige Heizleiterabschnitte 2 des Schichtheizleiters 104 in Frontalansicht. Die geradlinigen Heizleiterabschnitte 2 sind parallel beabstandet angeordnet, wobei benachbarte geradlinige Heizleiterabschnitte 2 endseitig durch dazu querliegende Verbindungsabschnitte 3 miteinander verbunden sind.

Im Gegensatz zu der Flächenheizung 101 weist die Flächenheizung 1 zwei bandförmige, geradlinige Messelektroden 4, 5 auf, die auf der Isolierungsschicht 103 zwischen jeweils zwei benachbarten geradlinigen Heizleiterabschnitten 2 des Schichtheizleiters 104 parallel dazu angeordnet sind. Die Messelektroden 4, 5 sind von dem Schichtheizleiter 104 elektrisch isoliert und potenzial- bzw. spannungsfrei. Das Material der Messelektroden 4, 5 mag dem Material des Schichtheizleiters 104 entsprechen, was eine vereinfachte Herstellung erlaubt, beispielsweise durch Aufbringung in einem gleichen Arbeitsschritt, z.B. durch Plasmaabscheidung. Das Material der Messelektroden 4, 5 mag auch ein anderes, z.B. preisgünstigeres, Material sein als das Material des Schichtheizleiters 104. Die Messelektroden 4, 5 bestehen bevorzugt aus dem gleichen Material und sind vorzugsweise auch sonst gleich aufgebaut.

Die Kapazitätsmesseinrichtung K ist nun einerseits sowohl an die Messelektrode 4 als auch an die Messelektrode 5 angeschlossen und ist andererseits mit dem an Masse GND anliegenden metallischen Trägersubstrat 102 angeschlossen. Das Trägersubstrat 102 dient folglich als Messgegenelektrode. Die Messelektroden 4, 5 bilden zusammen einen Pol 4, 5 eines Kondensators 4, 5, 103, 102, was eine Messgenauigkeit erhöht. Grundsätzlich mag aber auch nur eine Messelektrode 4 oder 5 an die Kapazitätsmesseinrichtung K angeschlossen sein, oder es mögen, falls vorhanden, auch mehr als zwei Messelektroden zusammen an einen gemeinsamen Messanschluss der Kapazitätsmesseinrichtung K angeschlossen sein, insbesondere elektrisch parallel verschaltet. Da die Isolierungsschicht 103 eine temperaturabhängig veränderbare Permittivität aufweist, wird sich die Kapazität C(T) des Kondensators 4, 5, 103, 102 temperaturabhängig ändern, woraus sich die Temperatur in der Isolierungsschicht 103 bzw. am Heizleiter 104 bestimmen lässt, z.B. mittels einer Auswerteeinheit A. Die Auswerteeinheit A mag mit der Kapazitätsmesseinrichtung K gekoppelt sein und mag z.B. als Funktion einer zentralen Steuereinrichtung implementiert sein. Die Auswerteeinheit A und die Kapazitätsmesseinrichtung K mögen Teile oder Funktionen einer Temperaturmesseinrichtung K, A darstellen. Da die Messelektroden 4, 5 sich nahe an dem Schichtheizleiter 104 befinden, lässt sich eine genaue Temperaturmessung erreichen.

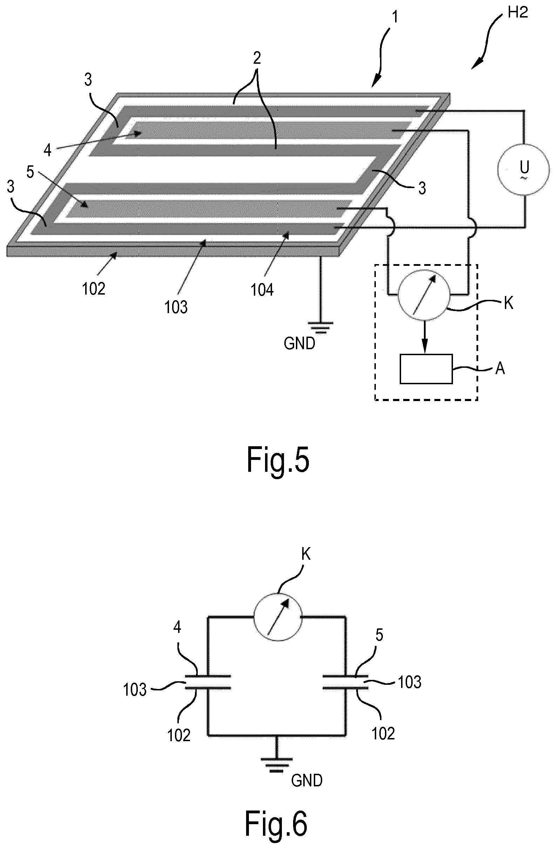

**Fig.5** zeigt in Schrägansicht eine Flächenheizung 1 mit zugehöriger Kapazitätsmesseinrichtung K in einem oder für ein Haushaltsgerät H2 gemäß einem zweiten Ausführungsbeispiel. Die Flächenheizung 1 und die Kapazitätsmesseinrichtung K des zweiten Ausführungsbeispiels weisen den gleichen Aufbau auf wie bei dem ersten Ausführungsbeispiel, sind aber anders verschaltet. **Fig.6** zeigt ein Ersatzschaltbild der Flächenheizung und der zugehörigen Kapazitätsmesseinrichtung K gemäß dem zweiten Ausführungsbeispiel.

Die Kapazitätsmesseinrichtung K ist nun einerseits an die Messelektrode 4 und andererseits an die Messelektrode 5 angeschlossen, welche jeweils Pole eines Kondensators 4, 103, 102 bzw. 5, 103, 102 mit dem Trägersubstrat 102 als gemeinsamem Gegenpol bilden. Die Kapazitätsmessung erfolgt hier zwischen einer Messelektrode 4 über die Isolierungsschicht 103, das Trägersubstrat 102 und nochmals die Isolierungsschicht 103 zu der Messelektrode 5. Auch hierdurch lässt sich eine genaue Temperaturmessung erreichen. Zudem ist die Kapazitätsmesseinrichtung K nun von der Versorgungsspannung sogar galvanisch getrennt.

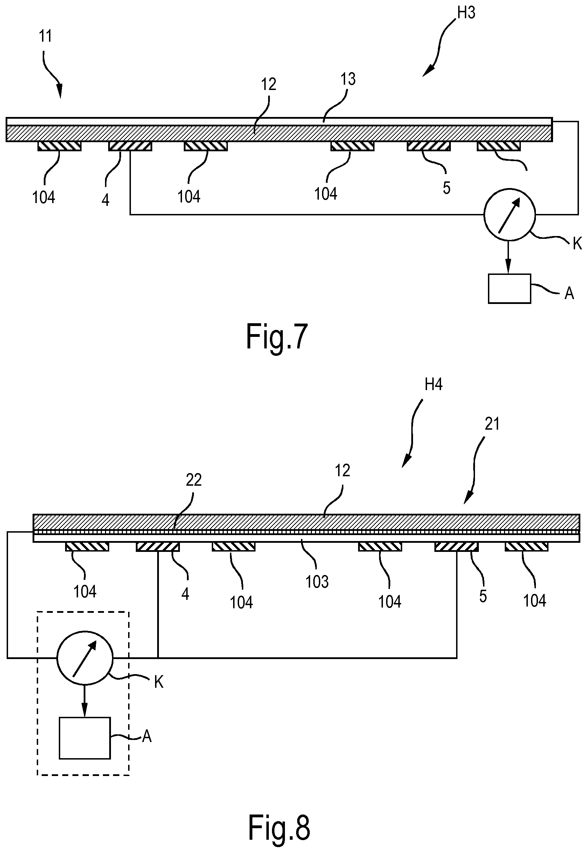

**Fig.7** zeigt eine Flächenheizung 11 mit zugehöriger Kapazitätsmesseinrichtung K in einem oder für ein Haushaltsgerät H3 gemäß einem dritten Ausführungsbeispiel. Die Flächenheizung 11 weist nun ein plattenförmiges, elektrisch isolierendes Trägersubstrat 12 auf, z.B. aus Glas, Keramik oder Glaskeramik. Der Schichtheizleiter 104 und die Messelektroden 4, 5 liegen direkt auf dem Trägersubstrat 12 auf. Die dem Schichtheizleiter 104 und den Messelektroden 4, 5 abgewandte Seite des Trägersubstrats 12 ist mit einer elektrisch leitenden Schicht, insbesondere Metallisierung 13, versehen, die als Messgegenelektrode dient. Der Kondensator wird folglich durch zumindest eine der Messelektroden 4, 5 als ein erster Pol, das Trägersubstrat 12 als Dielektrikum und die Metallisierung 13 als den anderen Pol gebildet. Die Kapazitätsmesseinrichtung K ist folglich einerseits an zumindest eine der Messelektroden 4, 5 und andererseits an die Metallisierung 13 angeschlossen. Die Metallisierung 13 mag an Masse GND angeschlossen sein. Dieses Ausführungsbeispiel weist den Vorteil eines besonders einfachen und robusten Aufbaus auf.

**Fig.8** zeigt eine Flächenheizung 21 mit zugehöriger Kapazitätsmesseinrichtung K in einem oder für ein Haushaltsgerät H4 gemäß einem dritten Ausführungsbeispiel. Die Flächenheizung 21 weist ein plattenförmiges, elektrisch isolierendes Trägersubstrat 12 auf, z.B. aus Glas, Keramik oder Glaskeramik. Dieses mag beispielsweise eine Oberseite oder Außenseite des Haushaltsgeräts H4 darstellen, z.B. als eine Kochfeldplatte eines als Kochfeld ausgebildeten Haushaltsgeräts H4 dienen.

Der Schichtheizleiter 104 und die Messelektroden 4, 5 liegen im Gegensatz zu der Flächenheizung 11 nicht direkt auf dem Trägersubstrat 12 auf, sondern auf einer flächigen Isolierungsschicht 103. Um eine Messgegenelektrode bereitzustellen, ist zwischen dem Trägersubstrat 12 und der Isolierungsschicht 103 eine elektrisch leitende Zwischenschicht 22 vorgesehen, welche z.B. der Metallisierung 13 gleichen kann. Die Zwischenschicht 22 mag an Masse GND angeschlossen sein. Dieses Ausführungsbeispiel weist den Vorteil auf, dass das Material des Trägersubstrats 12 nicht auf eine ausreichende Temperaturabhängigkeit hin ausgewählt zu werden braucht. Dies erhöht eine Auswahl an Materialien, z.B. im Hinblick auf eine Festigkeit, Bruchzähigkeit, Widerstandsfähigkeit, Farbe usw. Die Isolierungsschicht 103 mag z.B. im Hinblick auf eine gute Kapazitätsmessung hin ausgesucht werden.

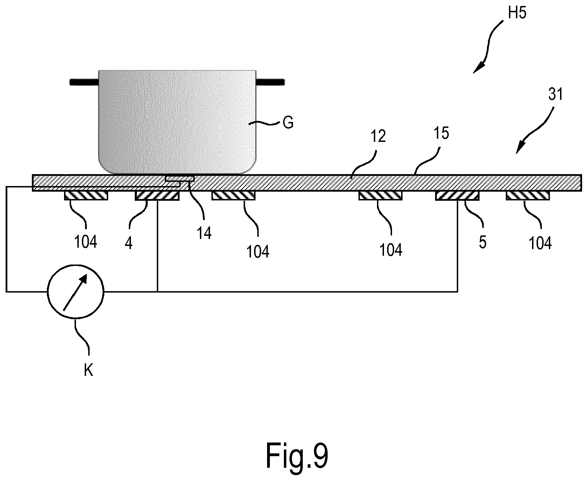

**Fig.9** zeigt eine Flächenheizung 31 mit zugehöriger Kapazitätsmesseinrichtung K in einem oder für ein Haushaltsgerät H5 gemäß einem vierten Ausführungsbeispiel. Die Flächenheizung 31 weist ein plattenförmiges, elektrisch isolierendes Trägersubstrat 12 auf, z.B. aus Glas, Keramik oder Glaskeramik. Dieses mag beispielsweise eine Oberseite oder Außenseite des Haushaltsgeräts H5 darstellen, z.B. als eine Kochfeldplatte eines als Kochfeld ausgebildeten Haushaltsgeräts H5 dienen.

Der Schichtheizleiter 104 und die Messelektroden 4, 5 liegen wie bei der Flächenheizung 11 direkt auf dem Trägersubstrat 12 auf. Eine Messgegenelektrode ist jedoch nicht Teil der Flächenheizung 31. Um dennoch eine Messgegenelektrode zur Kapazitätsmessung bereitzustellen, ist in die dem Schichtheizleiter 104 und den Messelektroden 4, 5 abgewandte Oberseite 15 des Trägersubstrats 12 flächenbündig mindestens ein elektrisch leitfähiges Kontaktelement 14 zum Kontaktieren eines Gargeschirrs G, z.B. eines Topfs oder einer Pfanne, eingelassen. Bei diesem Ausführungsbeispiel wird ausgenutzt, dass das Gargeschirr G großflächig auf dem Trägersubstrat 12 aufliegt und dadurch als Messgegenelektrode dienen kann. Die Kapazitätsmesseinrichtung K ist folglich einerseits an zumindest eine der Messelektroden 4, 5 und andererseits an mindestens ein Kontaktelement 14 und damit auch an das Gargeschirr G angeschlossen.

Selbstverständlich ist die vorliegende Erfindung nicht auf die gezeigten Ausführungsbeispiele beschränkt.

So mögen unter Messelektrode(n) und Messgegenelektrode(n) auch die jeweils entgegengesetzten Elektroden verstanden werden. Insbesondere mag eine Elektrode ohne Einschränkung entweder als Messelektrode oder als Messgegenelektrode bezeichnet werden. Die Messgegenelektrode mag insbesondere konventionsgemäß mit Masse verbunden sein.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Flächenheizung
- 2: Heizleiterabschnitt
- 3: Verbindungsabschnitt
- 4: Messelektrode
- 5: Messelektrode
- 11: Flächenheizung
- 12: Trägersubstrat
- 13: Metallisierung
- 14: Kontaktelement
- 15: Oberseite
- 21: Flächenheizung
- 31: Flächenheizung
- 101: Flächenheizung
- 102: Trägersubstrat
- 103: Isolierungsschicht
- 104: Schichtheizleiter
- A: Auswerteeinheit
- C: Kapazität
- G: Gargeschirr
- GND: Masse
- H1: Haushaltsgerät
- H2: Haushaltsgerät
- H3: Haushaltsgerät
- H4: Haushaltsgerät
- K: Kapazitätsmesseinrichtung
- T: Temperatur
- U: Netzspannung

## Patentansprüche

1. Flächenheizung (1; 11; 21; 31) für ein Haushaltsgerät (H 1; H2; H3; H4; H5), aufweisend mindestens einen auf einer elektrisch isolierenden Isolierungsschicht (103; 12) mit temperaturabhängig veränderbarer Permittivität aufgebrachten bandförmigen Heizleiter (104),
**dadurch gekennzeichnet, dass**
auf der gleichen Seite der Isolierungsschicht (103; 12) wie der Heizleiter (104) mindestens eine gegenüber dem mindestens einen Heizleiter (104) elektrisch isolierte Messelektrode (4, 5) aufgebracht ist und
die Flächenheizung (1; 11; 21; 31) mindestens eine mittels der Isolierungsschicht (103; 12) von dem mindestens einen Heizleiter (104) und von der mindestens einen Messelektrode (4, 5) getrennte Messgegenelektrode (102; 13; 22) aufweist.

2. Flächenheizung (1; 11; 21; 31) nach Anspruch 1, **dadurch gekennzeichnet, dass** die Messelektrode (4, 5) eine streifenförmige Messelektrode ist, welche in einem Bereich zwischen zwei parallel verlaufenden Abschnitten (3) des Heizleiters (104) angeordnet ist.

3. Flächenheizung (1) nach Anspruch 1 oder 2, **dadurch gekennzeichnet, dass** der mindestens eine Heizleiter (104) über die Isolierungsschicht (103; 12) auf einem flächigen, elektrisch leitfähigen Trägersubstrat (102) aufgebracht ist und das Trägersubstrat (102) als Messgegenelektrode vorgesehen ist.

4. Flächenheizung (11; 21; 31) nach Anspruch 1 oder 2, **dadurch gekennzeichnet, dass** die Isolierungsschicht (103; 12) als ein elektrisch isolierendes Trägersubstrat (12) ausgebildet ist.

5. Flächenheizung (11) nach Anspruch 4, **dadurch gekennzeichnet, dass** an einer dem Heizleiter (104) abgewandten Seite des elektrisch isolierenden Trägersubstrats (12) mindestens eine Messgegenelektrode (13) angeordnet ist.

6. Flächenheizung (21) nach Anspruch 1 oder 2, **dadurch gekennzeichnet, dass** der mindestens eine Heizleiter (104) über die Isolierungsschicht (103) auf einer Seite einer als Messgegenelektrode vorgesehenen flächigen, elektrisch leitfähigen Schicht (22) aufgebracht ist, welche Schicht (22) mit ihrer anderen Seite an einem elektrisch isolierenden Trägersubstrat (12) angeordnet ist.

7. Flächenheizung (31) nach einem der Ansprüche 1 oder 2, **dadurch gekennzeichnet, dass** in die Seite des Trägersubstrats (12), welche dem mindestens einen Heizleiter (104) abgewandt ist, mindestens eine elektrisch leitfähiges Kontaktelement (14) zur elektrischen Kontaktierung einer auf diese Seite des Trägersubstrats (12) aufsetzbaren Messgegenelektrode (G) eingelassen ist.

8. Haushaltsgerät (H1; H2; H3; H4; H5), insbesondere Gargerät, insbesondere Kochgerät, mit mindestens einem System aus mindestens einer Flächenheizung (1, 11, 21, 31) nach einem der Ansprüche 1 bis 7 und mindestens einer Temperaturmesseinrichtung (K, A), welche Temperaturmesseinrichtung (K, A) eine Kapazitätsmesseinrichtung (K) aufweist, **dadurch gekennzeichnet, dass** die Kapazitätsmesseinrichtung (K) an die mindestens eine Messelektrode (4, 5) angeschlossen ist.

9. Haushaltsgerät (H2) nach Anspruch 8, **dadurch gekennzeichnet, dass** mindestens zwei Messelektroden (4, 5) an der Flächenheizung (1; 11; 21; 31) vorhanden sind und die Kapazitätsmesseinrichtung (K) zwischen zwei der Messelektroden (4, 5) geschaltet ist.

10. Haushaltsgerät (H1, H3; H4; H5) nach Anspruch 8, **dadurch gekennzeichnet, dass** die Kapazitätsmesseinrichtung (K) einerseits an die mindestens eine Messelektrode (4, 5) und andererseits an die mindestens eine davon mittels der Isolierungsschicht (103) getrennte Messgegenelektrode (102; 13; 22) angeschlossen ist.

## Claims

1. Surface heater (1; 11; 21; 31) for a household appliance (HI; H2; H3; H4; H5) having at least one strip-shaped heat conductor (104) applied to an electrically insulating insulation layer (103; 12), the permittivity of which changes according to temperature, **characterised in that**
at least one measuring electrode (4, 5) electrically insulated in relation to the at least one heat conductor (104) is applied on the same side of the insulation layer (103; 12) as the heat conductor (104) and
the surface heater (1; 11; 21; 31) has at least one counter measuring electrode (102; 13; 22) separated by means of the insulation layer (103; 12) from the at least one heat conductor (104) and from the at least one measuring electrode (4, 5).

2. Surface heater (1; 11; 21; 31) according to claim 1, **characterised in that** the measuring electrode (4, 5) is a strip-shaped measuring electrode, which is disposed in an area between two sections (3) of the heat conductor (104) running in parallel.

3. Surface heater (1) according to claim 1 or 2, **characterised in that** the at least one heat conductor (104) is applied over the insulation layer (103; 12) to a planar electrically conductive carrier substrate (102) and the carrier substrate (102) is intended as a counter measuring electrode.

4. Surface heater (11; 21; 31) according to claim 1 or 2, **characterised in that** the insulation layer (103; 12) is embodied as an electrically insulating carrier substrate (12).

5. Surface heater (11) according to claim 4, **characterised in that** at least one counter measuring electrode (13) is disposed on a side of the electrically insulating carrier substrate (12) facing away from the heat conductor (104).

6. Surface heater (21) according to claim 1 or 2, **characterised in that** the at least one heat conductor (104) is disposed over the insulation layer (103) on a side of a planar, electrically conductive layer (22) provided as a counter measuring electrode, which layer (22) is disposed with its other side on an electrically insulating carrier substrate (12).

7. Surface heater (31) according to one of claims 1 or 2, **characterised in that** at least one electrically conductive contact element (14) for electrical contacting of a counter measuring electrode (G) able to be placed on this side of the carrier substrate (12) is let into the side of the carrier substrate (12), which faces away from the at least one heat conductor (14).

8. Household appliance (HI; H2; H3; H4; H5), especially an appliance for cooking food, especially a cooking appliance, with at least one system comprising at least one surface heater (1, 11, 21, 31) according to one of claims 1 to 7 and at least one temperature measuring device (K, A), which temperature measuring device (K, A) has a capacitance measuring device (K), **characterised in that** the capacitance measuring device (K) is connected to the at least one measuring electrode (4, 5).

9. Household appliance (H2) according to claim 8, **characterised in that** at least two measuring electrodes (4, 5) are present on the surface heater (1; 11; 21; 31) and the capacitance measuring device (K) is connected between two of the measuring electrodes (4, 5).

10. Household appliance (HI; H3; H4; H5) according to claim 8, **characterised in that** the capacitance measuring device (K) is connected on one side to the at least one measuring electrode (4, 5) and on the other side to the at least one counter measuring electrode (102; 13; 22) separated therefrom by means of the insulation layer (103).

## Revendications

1. Dispositif de chauffage par rayonnement (1 ; 11 ; 21 ; 31) pour un appareil ménager (H1 ; H2 ; H3 ; H4 ; H5), présentant au moins un conducteur chauffant (104) en forme de bande, placé sur une couche d'isolation (103 ; 12) électriquement isolante, avec permittivité variable en fonction de la température,
**caractérisé en ce que**
sur le même côté de la couche d'isolation (103 ; 12) que le conducteur chauffant (104) est placée au moins une électrode de mesure (4, 5) électriquement isolante par rapport à l'au moins un conducteur chauffant (104), et
**en ce que** le dispositif de chauffage par rayonnement (1 ; 11 ; 21 ; 31) présente au moins une contre-électrode de mesure (102 ; 13 ; 22) séparée de l'au moins un conducteur chauffant (104) et de l'au moins une électrode de mesure (4, 5) au moyen de la couche d'isolation (103 ; 12).

2. Dispositif de chauffage par rayonnement (1 ; 11 ; 21 ; 31) selon la revendication 1,
**caractérisé en ce que** l'électrode de mesure (4, 5) est une électrode de mesure en forme de bande, laquelle est disposée dans une partie située entre deux sections (3) du conducteur chauffant (104), s'étendant parallèlement.

3. Dispositif de chauffage par rayonnement (1) selon la revendication 1 ou 2, **caractérisé en ce que** l'au moins un conducteur chauffant (104) est placé sur un substrat porteur (102) plan électro-conducteur par l'intermédiaire de la couche d'isolation (103 ; 12) et **en ce que** le substrat porteur (102) est ménagé comme contre-électrode de mesure.

4. Dispositif de chauffage par rayonnement (11 ; 21 ; 31) selon la revendication 1 ou 2,
**caractérisé en ce que** la couche d'isolation (103 ; 12) est réalisée comme un substrat porteur (12) électro-conducteur.

5. Dispositif de chauffage par rayonnement (11) selon la revendication 4, **caractérisé en ce qu'**au moins une contre-électrode de mesure (13) est disposée sur un côté, détourné du conducteur chauffant (104), du substrat porteur (12) électriquement isolant.

6. Dispositif de chauffage par rayonnement (21) selon la revendication 1 ou 2, **caractérisé en ce que** l'au moins un conducteur chauffant (104) est placé sur un côté d'une couche (22) électro-conductrice plane, ménagée comme contre-électrode de mesure, par l'intermédiaire de la couche d'isolation (103), laquelle couche (22) est disposée avec son autre côté sur un substrat porteur (12) électriquement isolant.

7. Dispositif de chauffage par rayonnement (31) selon la revendication 1 ou 2, **caractérisé en ce que** dans le côté du substrat porteur (12), lequel côté est détourné de l'au moins un conducteur chauffant (104), est incorporé au moins un élément de contact (14) électro-conducteur pour la mise en contact électrique d'une contre-électrode de mesure (G) pouvant être posée sur ce côté du substrat porteur (12).

8. Appareil ménager (H1 ; H2 ; H3 ; H4 ; H5), notamment appareil de cuisson, notamment appareil pour préparations culinaires, comprenant au moins un système constitué d'au moins un dispositif de chauffage par rayonnement (1, 11, 21, 31) selon l'une quelconque des revendications 1 à 7 et d'au moins un dispositif de mesure de température (K, A), lequel dispositif de mesure de température (K, A) présente un dispositif de mesure de capacité (K), **caractérisé en ce que** le dispositif de mesure de capacité (K) est raccordé à l'au moins une électrode de mesure (4, 5).

9. Appareil ménager (H2) selon la revendication 8, **caractérisé en ce qu'**au moins deux électrodes de mesure (4, 5) sont présentes sur le dispositif de chauffage par rayonnement (1 ; 11 ; 21 ; 31) et **en ce que** le dispositif de mesure de capacité (K) est connecté entre deux électrodes de mesure (4, 5).

10. Appareil ménager (H1, H3 ; H4 ; H5) selon la revendication 8, **caractérisé en ce que** le dispositif de mesure de capacité (K) est raccordé d'une part à l'au moins une électrode de mesure (4, 5) et d'autre part à l'au moins une contre-électrode de mesure (102 ; 103) qui en est séparée au moyen de la couche d'isolation (103).
